# EUROPÄISCHE PATENTANMELDUNG

(11) **EP 0 893 067 A2**
(43) Veröffentlichungstag der Anmeldung: **27.01.1999**
(21) Anmeldenummer: 98111737.7
(22) Anmeldetag: 25.06.1998
(51) Int. Cl.: A23L 1/164, A23L 1/217

(54) **Verfahren zum Herstellen von fritierbaren Halbfertigprodukten aus Teig**

(30) Priorität: 27.06.1997 DE 19727455
(71) Anmelder: Bahlsen Snacks Produktions GmbH & Co., 63263 Neu-Isenburg (DE)
(72) Erfinder: Werner, Horst, 63225 Langen (DE); Mohr, Günter, Dipl.-Ing., 63263 Neu-Isenburg (DE)
(74) Vertreter: Glawe, Delfs, Moll & Partner

(57) **Zusammenfassung**

Das Verfahren zum Herstellen von fritierbaren Halbfertigprodukten aus Teig, bei dem der Teig zu einem fortlaufenden Teigband geformt und mit einer mindestens eine mit längs oder quer verlaufenden länglichen Vorsprüngen versehene Walze aufweisenden Schlitzvorrichtung mit Schlitzen längs oder quer zur Bewegungsrichtung des Produktbandes versehen wird und anschließend mit einem Förderband zu einer Portioniereinrichtung transportiert wird, in der es nach Übereinanderlegen von zwei Teigbandlagen zu Portionen vereinzelt wird, zeichnet sich dadurch aus, daß das Förderband sich schneller bewegt als das an der Schlitzvorrichtung austretende Teigband.

## Beschreibung

Die Erfindung betrifft ein Verfahren zum Herstellen von fritierbaren Halbfertigprodukten aus Teig, bei dem der Teig zu einem fortlaufenden Teigband geformt und mit einer mindestens eine mit längs oder quer verlaufenden länglichen Vorsprüngen versehene Walze aufweisenden Schlitzvorrichtung mit Schlitzen längs oder quer zur Bewegungsrichtung des Produktbandes versehen wird und anschließend mit einem Förderband zu einer Portioniereinrichtung transportiert wird, in der es nach Übereinanderlegen von zwei Teigbandlagen zu Portionen vereinzelt wird.

Bei einem bekannten Verfahren dieser Art (US 3,512,990) wird das Teigband vor dem Portionieren übereinandergelegt, um so taschenförmige Fertigprodukte zu erhalten. Vorher wird das Teigband mit Schlitzen versehen, um so die Oberfläche zu vergrößern, in die das Fett eindringen kann und an der beim späteren Verzehren Soßen anhaften können.

Die Schlitze werden dabei im wesentlichen die Breite haben, die die länglichen, längs oder quer verlaufenden Vorsprünge auf der Walze haben, mit denen sie erzeugt werden. Diese Breite darf nicht zu groß sein, da sonst das Material nicht gequetscht wird und an seinen Rändern unerwünschte Materialansammlungen bildet. Andererseits möchte man aber erreichen, daß die Schlitze eine nicht zu geringe Mindestbreite haben.

Die Aufgabe der Erfindung besteht in der Schaffung eines Verfahrens der eingangs genannten Art, bei dem Schlitze mit wesentlich größerer Breite hergestellt werden können.

Die erfindungsgemäße Lösung besteht darin, daß das Förderband sich schneller bewegt als das aus der Schlitzvorrichtung austretende Teigband. Dadurch wird das Teigband mit den quer verlaufenden Schlitzen auseinandergezogen, wodurch sich die Schlitze öffnen. Man erhält so durch eine sehr einfache Maßnahme ein erstaunlich vorteilhaftes Ergebnis und Erzeugnis.

Zweckmäßigerweise weist das Teigband eine Dicke von ca. 0,5-1,5 mm auf, wobei eine besonders vorteilhafte Dicke zwischen ungefähr 0,7 und 0,9 mm liegt.

Die länglichen, quer verlaufenden Vorsprünge können einfach eine Einprägung am Teigband vornehmen, wodurch bereits die Oberfläche erhöht wird. Wenn die Schlitzvorrichtung das Teigband aber durchtrennt, so werden sich die Schlitze besonders leicht beim Auseinanderziehen öffnen, und es wird eine besonders große Oberfläche erzielt, wobei das Fritieröl beim Fritieren leicht in das Innere der Halbfertigprodukte gelangen kann und später die Soßen leichter in das Innere des Fertigproduktes gelangen können.

Vorteilhafterweise ist die Geschwindigkeit des Förderbandes mindestens 1,1 mal so groß wie diejenige des Teigbandes, das auf dasselbe gelangt. Andererseits kann vorgesehen sein, daß diese Geschwindigkeit ungefähr 1,4 mal so groß ist.

Vorteilhafterweise weist die Portioniereinrichtung eine oder mehrere Schneidkanten und zugehörige Andruckkanten auf. Mit den Andruckkanten auf allen Seiten der Schneidkante werden die beiden Teiglagen zur Bildung einer Tasche zusammengedrückt. Durch die dazwischen befindliche Schneidkante findet dann die Ausstanzung der einzelnen taschenförmigen Produkte statt.

Bei einer anderen vorteilhaften Ausführungsform wird dies in zwei Schritten durchgeführt. In einem ersten Schritt werden die Ränder der zu bildenden Halbfertigprodukte zusammengedrückt; in einem zweiten Schritt werden die endgültigen Halbfertigprodukte ausgestanzt.

Vorteilhafterweise werden die Halbfertigprodukte anschließend einem Trockner zugeführt, in dem sie auf eine Endfeuchte von ungefähr 11-13% getrocknet werden. In diesem Zustand können die Halbfertigprodukte dann an die Hersteller der Fertigprodukte geliefert werden, die diese gegebenenfalls noch fritieren und später würzen können. Durch die relativ schnelle Trocknung bleiben die Schlitze auf Dauer geöffnet und ziehen sich nicht wieder zusammen.

Vorteilhafterweise wird der gelatinierte Teig bei einer Gelatinierungstemperatur von ungefähr 80-100°C mittels eines Einoder Zweiwellenextruders hergestellt. Bei einer anderen vorteilhaften Ausführungsform findet die Herstellung mittels eines kontinuierlich arbeitenden Kneters statt, wobei die notwendige Gelatinierungstemperatur von ungefähr 95-105°C durch Injektion eines Dampfes erreicht wird.

Das Teigband wird vorteilhafterweise mit Hilfe von Rund- oder Breitschlitzdüsen oder Walzen hergestellt.

Zur Herstellung des Teigs können trockene Rohstoffe, z.B. mit Kartoffelgranulat-Flocken, Lebensmittelstärken verschiedenen Ursprungs, Weizenmehl, Maisgrieß/mehl und andere kohlehydrathaltige Rohstoffe trocken gemischt und dann angefeuchtet werden. Die Mischungsfeuchte beträgt ca. 26-38%, in erster Linie aber 29-34%. Diese Mischung wird dann in die Gelatinierungsstufe gegeben, damit das Material gelatiniert. Es entsteht so eine zähe plastische, aber noch formbare Masse. Aus dieser Masse wird dann das Teigband geformt, das wie oben beschrieben weiterverarbeitet wird.

## Patentansprüche

1. Verfahren zum Herstellen von fritierbaren Halbfertigprodukten aus Teig, bei dem der Teig zu einem fortlaufenden Teigband geformt und mit einer mindestens eine mit längs oder quer verlaufenden länglichen Vorsprüngen versehene Walze aufweisenden Schlitzvorrichtung mit Schlitzen längs oder quer zur Bewegungsrichtung des Produktbandes versehen wird und anschließend mit einem Förderband zu einer Portioniereinrichtung transportiert wird, in der es nach Übereinanderlegen von zwei Teigbandlagen zu Portionen vereinzelt wird, dadurch gekennzeichnet, daß das Förderband sich schneller bewegt als das an der Schlitzvorrichtung austretende Teigband.

2. Verfahren nach Anspruch 1, dadurch gekennzeichnet, daß das Teigband eine Dicke von ca. 0,5 bis 1,5 mm aufweist.

3. Verfahren nach Anspruch 2, dadurch gekennzeichnet, daß das Teigband eine Dicke von ca. 0,7 bis 0,9 mm aufweist.

4. Verfahren nach einem der Ansprüche 1 bis 3, dadurch gekennzeichnet, daß das Teigband in der Schlitzvorrichtung durchtrennt wird.

5. Verfahren nach einem der Ansprüche 1 bis 4, dadurch gekennzeichnet, daß die Geschwindigkeit des Förderbandes mindestens ungefähr 1,1 mal so groß ist wie diejenige des auf dasselbe gelangenden Teigbandes.

6. Verfahren nach einem der Ansprüche 1 bis 4, dadurch gekennzeichnet, daß die Geschwindigkeit des Förderbandes ungefähr 1,4 mal so groß ist wie diejenige des auf dasselbe gelangenden Teigbandes.

7. Verfahren nach einem der Ansprüche 1 bis 6, dadurch gekennzeichnet, daß die Portioniereinrichtung eine oder mehrere Schneidkanten und zugehörige Andruckkanten aufweist.

8. Verfahren nach einem der Ansprüche 1 bis 7, dadurch gekennzeichnet, daß in einem ersten Schritt die Ränder der zu bildenden Halbfertigprodukte zusammengedrückt werden und in einem zweiten Schritt die endgültigen Halbfertigprodukte ausgestanzt werden.

9. Verfahren nach einem der Ansprüche 1 bis 8, dadurch gekennzeichnet, daß die Halbfertigprodukte einem Trockner zugeführt werden.

10. Verfahren nach einem der Ansprüche 1 bis 9, dadurch gekennzeichnet, daß der Teig gelatiniert ist und mittels eines Ein- oder Zweiwellenextruders bei einer Gelatinierungstemperatur von ungefähr 80 bis 100°C hergestellt ist.

11. Verfahren nach einem der Ansprüche 1 bis 9, dadurch gekennzeichnet, daß der Teig mit Hilfe eines kontinuierlichen Kneters hergestellt ist, wobei die Gelatinierungstemperatur vorteilhafterweise ungefähr 95 bis 105°C durch Injektion von überhitztem Dampf erzielt wird.

12. Verfahren nach einem der Ansprüche 1 bis 11, dadurch gekennzeichnet, daß das Teigband mit Hilfe von Rund- oder Breitschlitzdüsen oder Walzen hergestellt ist.
